# EUROPEAN PATENT APPLICATION

(11) **EP 3 932 868 A1**
(43) Date of publication of application: **05.01.2022**
(21) Application number: 20763297.7
(22) Date of filing: 26.02.2020
(51) Int. Cl.: C01G 23/00, C09K 3/14, F16D 69/00, F16D 69/02

(54) **PARTICLES CONTAINING TITANIC ACID COMPOUND, METHOD FOR PRODUCING PARTICLES CONTAINING TITANIC ACID COMPOUND, AND FRICTION MATERIAL**

(30) Priority: 28.02.2019 JP 2019036432; 21.05.2019 JP 2019095252
(71) Applicant: Toho Titanium CO., LTD., Chigasaki-shi Kanagawa 253-8510 (JP)
(72) Inventor: HORIKAWA,Matsuhide, Chigasaki-shi, Kanagawa 253-8510 (JP); TANI,Seiichiro, Chigasaki-shi, Kanagawa 253-8510 (JP); FUJII,Hideki, Chigasaki-shi, Kanagawa 253-8510 (JP); HEYA,Tomoaki, Takasaki-shi, Gunma 370-0032 (JP); WATANABE,Hideki, Takasaki-shi, Gunma 370-0032 (JP)
(74) Representative: Mewburn Ellis LLP
(86) International application number: PCT/JP2020/007835
(87) International publication number: WO 2020/175575

(57) **Abstract**

Particles containing a titanate compound according to the present invention comprise alkali metal titanate particles and binder layers, wherein the particles containing the titanate compound has a 50% particle diameter D50 of from 40 µm to 100 µm, and wherein a content ratio of the particles containing the titanate compound having a shorter diameter d of 3 µm or less, a longer diameter L of 5 µm or more, and an aspect ratio (L/d) of 3 or more is 0.05mass% or less.

## Description

### FIELD OF THE INVENTION

The present invention relates to particles containing a titanate compound, which comprises alkali metal titanate particles, a method for producing particles containing the titanate compound, and a friction material. More particularly, the present invention proposes a technique that can contribute to improvement of health and safety in use.

### BACKGROUND OF THE INVENTION

Conventionally, a friction material for friction sliding members such as brake linings, disc pads, and clutch fading for braking devices in automobiles, railroad vehicles, aircrafts, industrial machineries, and the like has used asbestos bonded with an organic or inorganic binder. However, the asbestos cannot sufficiently provide desired friction and wear characteristics including heat resistance required for the friction materials, as well as it causes problems of harmful effects on human bodies and environment such as carcinogenicity. Therefore, there is a need for alternative materials.

Under such circumstances, in recent years, it has been studied to use an alkali metal titanate represented by potassium titanate which does not show carcinogenicity as in asbestos for the friction material as described above, and development of the alternative material has progressed. In particular, among alkali metal titanates, potassium titanate has improved heat resistance, and produces effects of preventing a fade phenomenon of friction brakes and improving thermal stability of friction characteristics.

Such a type of technique is described in, for example, Patent Literatures 1 and 2.

Patent Literature 1 discloses: "porous titanate compound particles having a cumulative pore volume of 5% or more within a pore diameter range of 0.01 to 1.0 µm, each formed of titanate compound crystal grains bonded together, and each including a treated layer formed on a surface thereof and made of a hydrophobic surface treatment agent". Patent Literature 1 also discloses that the "porous titanate compound particles" are "capable of giving excellent fade resistance and moisture-proof properties when used in a friction material".

Further, Patent Literature 2 proposes "an alkaline titanate hollow body powder composed of a hollow body shell in which alkaline titanate particles having mainly a rod, a columnar, a cylindrical, a rectangular, granular, and/or a plate shape are bonded" for the purpose of providing "a hollow body powder comprised of an alkali titanate which has mainly a rod, a columnar, a cylindrical, a rectangular, granular, and/or a plate shape and a good heat resistance, and which is suitable for a base fiber and/or a friction modifier of the friction material, a method of manufacturing the same, and a friction material containing the same".

### CITATION LIST

### Patent Literatures

[Patent Literature 1] WO 2017/051690 A1
[Patent Literature 2] Japanese Patent Application Publication No. 2009-114050 A

### SUMMARY OF THE INVENTION

### Technical Problem

Since the alkali metal titanate has excellent properties as described above, it would be useful for use in a predetermined application such as a friction material. However, as described in Patent Literatures 1 and 2, the particles of the alkali metal titanate may include a fibrous material having an average fiber length of 10 to 20 µm and an average fiber diameter of 0.1 to 0.5 µm. The World Health Organization (WHO) provides that conditions for fibers, so-called WHO fibers, are such that a length (longer diameter L) is longer than 5 µm and a thickness (shorter diameter d) is less than 3 µm, and a ratio of length to thickness (aspect ratio) is more than 3:1. There is still room for further improvement of the alkali metal titanate particles in terms of such environmental hygiene.

It cannot be said that Patent Literatures 1 and 2 have sufficiently studied a specific method for reducing the fibrous fine particles of the alkali metal titanate as described above.

The present invention has been made to address such problems. An object of the present invention is to provide particles containing a titanate compound, a method for producing particles containing a titanate compound, and a friction material, which have a little effect on human bodies in use and high safety.

### Solution to Problem

As a result of intensive studies, the present inventors have found that the impact on the human bodies can be reduced and the safety can be improved while maintaining the required characteristics for predetermined applications, by mixing the alkali metal titanate particles with a binder in advance, and coating the alkali metal titanate particles with binder layers to increase the particle diameter.

Based on such findings, particles containing a titanate compound according to the present invention comprise alkali metal titanate particles and binder layers, wherein the particles containing the titanate compound has a 50% particle diameter D50 of from 40 µm to 100 µm, and wherein a content ratio of the particles containing the titanate compound having a shorter diameter d of 3 µm or less, a longer diameter L of 5 µm or more, and an aspect ratio (L/d) of 3 or more is 0.05mass% or less.

The particles containing the titanate compound according to the present invention preferably have a SPAN value of from 0.1 to 5.0.

Further, in the particles containing the titanate compound according to the present invention, an alkali metal contained in the alkali metal titanate particles is at least one selected from the group consisting of potassium, sodium and lithium.

Further, in the particles containing the titanate compound according to the present invention, it is preferable that the binder layers comprise a phenol resin, and a content of the phenol resin is from 1mass% to 10mass% with respect to the total amount of the particles containing the titanate compound.

Further, in the particles containing the titanate compound according to the present invention, it is preferable that the phenol resin is a resol type phenol resin.

A method for producing particles containing a titanate compound according to the present invention comprises: a raw material mixing step of mixing a titanium compound with an alkali metal compound to obtain a mixture; a burning step of heating the mixture to obtain alkali metal titanate particles; and a binder coating step of mixing the alkali metal titanate particles with a binder and coating at least a part of the periphery of the alkali metal titanate particles with binder layers to obtain the particles containing the titanate compound.

Here, the method for producing the particles containing the titanate compound according to the present invention may comprise a drying step of drying the particles containing the titanate compound after the binder coating step.

Further, in the method for producing the particles containing the titanate compound according to the present invention, it is preferable that the alkali metal titanate particles have a 50% particle diameter D50 of from 30 µm to 60 µm.

In the method for producing the particles containing the titanate compound according to the present invention, it is preferable that the burning step preferably comprises heating the mixture in a temperature range of from 800 °C to 1300 °C and maintaining the temperature for 10 minutes to 10 hours.

In the method for producing the particles containing the titanate compound according to the present invention, it is preferable that an alkali metal contained in the alkali metal titanate particles is at least one selected from the group consisting of potassium, sodium and lithium.

In the method for producing the particles containing the titanate compound according to the present invention, it is preferable that the binder used in the binder coating step comprises a resol type phenol resin.

Further, a friction material according to the present invention comprises any one of the particles containing the titanate compound as described above.

### Advantageous Effects of Invention

According to the present invention, the particles containing the titanate compound can have a little impact on human bodies and improved safety, because the particles containing the titanate compound has a 50% particle diameter D50 of from 40 µm to 100 µm, and has a content ratio of the particles containing the titanate compound having given dimensions of 0.05mass% or less.

### BRIEF DESCRIPTION OF THE DRAWINGS

FIG. 1 is an SEM image of potassium titanate particles before coating of particles containing a titanate compound of Example;
FIG. 2 is an SEM image of particles containing a titanate compound of Example 1;
FIG. 3 is an SEM image of particles containing a titanate compound of Example 7;
FIG. 4 is an SEM image of particles containing a titanate compound of Example 8;
FIG. 5 is a graph showing a volume frequency distribution of particles containing a titanate compound of Example 1;
FIG. 6 is a graph showing a volume frequency distribution of particles containing a titanate compound of Example 2;
FIG. 7 is a graph showing a volume frequency distribution of particles containing a titanate compound of Example 3;
FIG. 8 is a graph showing a volume frequency distribution of particles containing a titanate compound of Example 4;
FIG. 9 is a graph showing a volume frequency distribution of particles containing a titanate compound of Example 5;
FIG. 10 is a graph showing a volume frequency distribution of particles containing a titanate compound of Example 6;
FIG. 11 is a graph showing a volume frequency distribution of particles containing a titanate compound of Example 7; and
FIG. 12 is a graph showing a volume frequency distribution of particles containing a titanate compound of Example 8.

### DETAILED DESCRIPTION OF THE INVENTION

Hereinafter, embodiments of the present invention will be described in detail.

Particles containing a titanate compound according to an embodiment of the present invention includes alkali metal titanate particles and binder layers, wherein the particles containing the titanate compound has a 50% particle diameter D50 of from 40 µm to 100 µm, and has a content ratio of the particles containing the titanate compound of 0.05mass% or less, the particles containing the titanate compound having a shorter diameter d of 3 µm or less, a longer diameter L of 5 µm or more, and an aspect ratio (L/d) of 3 or more. Such particles containing the titanate compound can be produced by forming alkali metal titanate particles and then mixing the alkali metal titanate particles with a binder under predetermined conditions, as will be described below in detail.

### (Particles Containing Titanate Compound)

The particles containing the titanate compound includes mainly alkali metal titanate particles containing an alkali metal titanate and binder layers that cover at least a part of the periphery of the particles and adhere.

The alkali metal titanate is a crass of titanate compounds and is represented by the general formula: M₂O•nTlO₂ in which M is an alkali metal element and n is an integer of 1 to 12. Specific examples of the alkali metal contained in the alkali metal titanate include lithium, sodium, potassium, rubidium, cesium, and francium, and particularly preferably at least one selected from the group consisting of potassium, sodium, and lithium. Especially, specific examples of the alkali metal titanate represented by the general formula: M₂O•nTlO₂ in which n is an integer of 1 to 12 include sodium hexatitanate (Na₂Ti₆O₁₃), sodium octatitanate (Na₂Ti₈O₁₇), potassium hexatitanate (K₂Ti₆O₁₃), potassium octatitanate (K₂Ti₈O₁₇), and lithium pentatitanate (Li₄Ti₅O₁₂). Among them, for example, potassium hexatitanate (K₂O•6TiO₂) or potassium octatitanate (K₂O•8TiO₂) has a crystalline structure with a tunnel structure, and a friction material containing this compound has particularly improved characteristics such as heat resistance.

A content of the alkali metal titanate in the particles containing the titanate compound is preferably 50mass% to 99mass%, and more preferably 80mass% to 99mass%. When the content of the alkali metal titanate in the particles containing the titanate compound is beyond the above range, the particles containing the titanate compound cannot be maintained, which is not preferable in terms of productivity.

The binder layers around the alkali metal titanate particles also function to increase the particle diameter of the alkali metal titanate particles themselves and, in some cases, to bond the alkali metal titanate particles to each other, thereby effectively reducing fibrous fine particles that may be affected on human bodies.

The binder layers may include at least one selected from the group consisting of phenol resins, epoxy resins, polyimide resins, polyamide resins, unsaturated polyester resins, benzoxazine resins, cyanate ester resins, melamine resins, urea resins, polyurethane resins, diallyl phthalate resins, silicone resins, and vinyl ester resins. Among them, the binder layers preferably include the phenol resin. The phenol resin may be one of a large number of materials to be blended when preparing a friction material composition or the like using the particles containing the titanate compound. Therefore, when the binder layers contain the phenol resin, the required performance of the friction material or the like can be effectively ensured by increasing the particle size while improving the health safety by containing the phenol resin. The binder layers may generally be attached directly onto the periphery of the alkali metal titanate particles.

For the binder layers, the phenol resin such as a resol type phenol resin and a novolak type phenol resin may be used alone or in combination of two or more.

Here, the resol type phenol resin is obtained by allowing phenols and aldehydes to react in the presence of an alkaline catalyst. In general, it can be obtained by allowing the aldehydes and phenols to react at a molar ratio of aldehydes to phenols (aldehydes/phenols) of 1.3 to 3.0.

Examples of the phenols used for producing the resole type phenol resin include phenol, cresol, xylenol, resorcin, hydroquinone, tert-butylphenol, phenylphenol, biphenol, bisphenol A, and bisphenol F. Among them, phenol is preferable in terms of reactivity and price. These may be used alone or as a mixture of two or more.

Examples of aldehydes include formaldehyde, paraformaldehyde, polyoxymethylene, trioxane and the like.

The resol type phenol resin preferably has a weight average molecular weight in a range of from 300 to 3000.

The weight average molecular weight can be calculated by gel permeation chromatography (GPC) based on a calibration curve prepared using polystyrene as a standard substance.

The novolak type phenol resin is obtained by condensing phenols and aldehydes in the presence of an acidic catalyst. In general, it can be obtained by allowing the phenols and aldehydes to react at a molar ratio of aldehydes to phenols (aldehydes/phenols) of 0.5 to 0.9.

Examples of the phenols used for producing the novolak type phenol resin include phenol, cresol, xylenol, resorcin, hydroquinone, tert-butylphenol, phenylphenol, biphenol, bisphenol A, bisphenol F and the like. These may be used alone or as a mixture of two or more.

Examples of aldehydes include formaldehyde, paraformaldehyde, polyoxymethylene, trioxane and the like.

The novolak type phenol resin preferably has a weight average molecular weight in a range of from 500 to 10000. The weight average molecular weight can be calculated by gel permeation chromatography (GPC) based on a calibration curve prepared using polystyrene as a standard substance.

When the novolak type phenol resin is used, hexamethylenetetramine can be used as a curing agent.

As the phenol resin that can be contained in the binder layers, variously modified resins can also be used. Examples of the modified resins include NBR-modified phenol resins, SBR-modified phenol resins, acrylic-modified phenol resins, silicone-modified phenol resins, aralkyl-modified phenol resins and the like.

The phenol resin used for the binder layer is used in the liquid base state. In this case, the resin preferably has a solid content of 10mass% to 60mass%. A solvent used for the binder layers may be an organic solvent in addition to water. Examples of the organic solvent used herein include methanol, ethanol, isopropyl alcohol, acetone, methyl ethyl ketone, methyl isobutyl ketone, toluene, xylene, ethylene glycol, propylene glycol and the like. Especially, an organic solvent having a low boiling point is preferable in terms of dryness.

When the binder layers contain the phenol resin, the content of the phenol resin in the particles containing the titanate compound (i.e., the content of the phenol resin based on the total amount of the particles containing the titanate compound) is preferably from 1mass% to 10mass%, and more preferably from 1mass% to 5mass%, and still more preferably from 2mass% to 4mass%. If the content of the phenol resin is less than the above lower limit, the effect of increasing the particle diameter may not be sufficiently obtained. On the other hand, if the content of the phenol resin is more than the above upper limit, the particle diameter may be excessively increased, or uniform mixing may be difficult. The content of the phenol resin is measured by a weight loss rate after burning at 550 °C for 5 hours.

Further, the particles containing the titanate compound may contain silicon derived from ore, for example. However, even if they contain silicon, its silicon content is, for example, 3mass% or less, and preferably 2mass% or less.

In addition, the particles containing the titanate compound may further contain at least one element selected from the group consisting of Fe, Mg, Al, and V, which are derived from ore or the like. The total content of these elements is, for example, 4mass% or less, and typically 3mass% or less.

Many of the particles containing the titanate compound as described above tend to have a shape such as a rounded sphere due to the presence of the binder layers. This means that there are few fibrous particles that may affect the human bodies, which is desirable in terms of health safety.

The particles containing the titanate compound has a 50% particle diameter D50 of from 40 µm to 100 µm, and preferably from 40 µm to 80 µm. Further, the particles containing the titanate compound preferably has a 10% particle diameter D10 of from 10 µm to 50 µm, and more preferably from 10 µm to 40 µm. Furthermore, the particles containing the titanate compound preferably has a 90% particle diameter D90 of from 40 µm to 150 µm, and more preferably from 50 µm to 130 µm. The particles containing the titanate compound preferably has a maximum particle diameter Dmax in a range of from 70 µm to 250 µm, and particularly from 80 µm to 210 µm. When each particle diameter of the particles containing the titanate compound is out of the above range, the application of the particles containing the titanate compound to a friction material for friction sliding members such as brake linings, disc pads, and clutch fading which constitute a braking device in automobiles, railway vehicles, aircrafts, and industrial machineries, may not be preferable in terms of difficulties in formulating design of friction materials and management of raw materials.

The particles containing the titanate compound preferably has a SPAN value of from 0.1 to 5.0, and more preferably from 0.2 to 2.5. The SPAN value is an index showing sharpness of a particle size distribution, and is expressed by the equation: SPAN value = (D90 - D10) / D50. When the SPAN value of the particles containing the titanate compound is out of the above range, the application of the particles containing the titanate compound to a friction material for friction sliding members such as brake linings, disc pads, and clutch fading which constitute a braking device in automobiles, railway vehicles, aircrafts, and industrial machineries, may not be preferable in terms of difficulties in formulating design of friction materials and management of raw materials.

The 50% particle diameter D50, the 10% particle diameter D10, the 90% particle diameter D90, and the maximum particle diameter Dmax as described above are determined by an area of a projected image of each of 10,000 or more particles containing the titanate compound using a particle size/shape distribution measuring device, assuming a volume of each particle to be a volume of a sphere having the same diameter as that of a circle having the same area as that area, and from the volume frequency distribution, calculating a diameter having a cumulative volume of 10%, 50%, 90%, or 100%.

For the particles containing the titanate compound, a content ratio of those having a shorter diameter of 3 µm or less, a longer diameter of 5 µm or more, and an aspect ratio of 3 or more, is 0.05mass% or less, and preferably 0.025mass% or less, and more preferably 0.01 mass% or less. The measurement of the content ratio of the particles containing the titanate compound having a shorter diameter d of 3 µm or less, a longer diameter L of 5 µm or more, and an aspect ratio (L/d) of 3 or more (hereinafter, also referred to as "fibrous particles") is carried out as follows. First, fibrous particles are identified by measuring the longer diameter L and the shorter diameter d in a projected image of each of 10,000 or more particles containing the titanate compound using a particle size/shape distribution measuring device, in which the longer diameter L is the maximum length between any two points on the contour line of the projected image, and the shorter diameter d is the minimum length in a direction perpendicular to the longer diameter. Then, using the particle size/shape distribution measuring device, a circumference length of the projected image of each fibrous particle identified as described above is measured, and a mass of each fibrous particle is calculated from a volume of a sphere with a cross section of a circle having the same circumference as that circumference length and a theoretical value of true density of the alkali metal titanate (potassium titanate, or the like). The masses of the respective fibrous particles are then integrated to calculate the total mass of the fibrous particles, and a ratio of the total mass of the fibrous particles to the total mass of the particles containing the titanate compound used in the measurement is determined to be the content ratio of the fibrous particles. The particle size/shape distribution measuring device may employ PITA-3 model from SEISHIN ENTERPRISE CO., LTD. Since the binder layers comprised of a relatively small amount of the phenol resin or the like can be uniformly dispersed and contained in the particles containing the titanate compound, even if the true density of the alkali metal titanate is used as the above true density without considering the binder layers, it does not significantly affect the calculation result of the content ratio of the fibrous particles.

In this specification, regardless of the definition of the actual WHO fibers, the particles containing the titanate compound having a shorter diameter d of 3 µm or less, a longer diameter L of 5 µm or more, and an aspect ratio (L/d) of 3 or more are targeted, and the particles containing the titanate compound are referred to as fibrous particles. Therefore, the present invention includes those in which the content ratio of the fibrous particles is 0.05mass% or less, regardless of the content ratio of WHO fibers.

### (Production Method)

The particles containing the titanate compound as described above are produced through, for example, a raw material mixing step of mixing a titanium compound with an alkali metal compound to obtain a mixture, a burning step of heating the mixture to obtain alkali metal titanate particles, optionally a crushing step of crushing the burned product into powder, and a binder coating step of mixing the alkali metal titanate particles with a binder, and coating at least a part of the periphery of the alkali metal titanate particles with binder layers to obtain particles containing the titanate compound. In addition, the production of the particles containing the titanate compound may optionally include a drying step of drying the particles containing the titanate compound obtained in the binder coating step.

In the raw material mixing step, a titanium compound and an alkali metal compound are used as raw materials.

Examples of the titanium compound that can be used herein includes one selected from the group consisting of titanium dioxide, titanium suboxide, orthotitanic acid or a salt thereof, metatitanic acid or a salt thereof, titanium hydroxide, peroxotitanic acid or a salt thereof, or a combination of two or more of those compounds. Among them, titanium dioxide is preferable. This is because titanium dioxide has improved mixing properties and reactivity with alkali metal compounds and is relatively inexpensive. When titanium dioxide is used, it is preferable that its crystal form is of rutile type or anatase type.

The titanium compound is generally used in the form of particulates, especially in the form of aggregates or granulations including granules. The aggregates mean coarse particles formed, such as secondary particles in which primary particles are aggregated, tertiary particles in which secondary particles are aggregated, and higher particles. In particular, the aggregates or granulations of titanium dioxide are suitable.

The titanium compound preferably has an average particle diameter of from 0.1 mm or more, and more preferably from 0.5 to 10 mm, and still more preferably from 0.5 to 1 mm, in order to carry out uniform mixing efficiently. However, even if the titanium compound is in the form of large aggregates or granulations having an average particle diameter of more than 10 mm, it can be used by decreasing the average particle diameter to 10 mm or less by means of crushing or pulverizing. Here, the average particle diameter means a value measured according to the test methods for sieving of chemical products defined in JIS K 0069. The same is true for an average particle diameter of the alkali metal compound as described later.

Examples of the aggregates of the titanium compound that can be used herein include sulfuric acid method-titanium oxide produced from titanium sulfate or titanyl sulfate; gas phase method-titanium oxide produced by oxidizing or hydrolyzing titanium tetrachloride in a gas phase; or titanium oxide produced by neutralizing or hydrolyzing an aqueous solution of titanium tetrachloride or alkoxy titanium, or the like. Further, the granulations of the titanium compound can also be used in place of the aggregates of the titanium compound. The granulations of the titanium compound can be obtained by granulating commercially available fine powdery titanium oxide by spray-drying, or by adding a binder and kneading the mixture to be granulated.

The alkali metal compound is preferably at least one selected from the group consisting of potassium compounds, sodium compounds and lithium compounds. More particularly, the alkali metal compound can be an oxide, carbonate, hydroxide, oxalate or the like of potassium, sodium and/or lithium. The carbonate or hydroxide that is melted by burning is particularly preferable.

When potassium titanate particles are obtained as alkali metal titanate particles, the titanium compound such as titanium oxide is mixed with the potassium compound such as potassium carbonate. In this case, the lithium compound such as lithium carbonate is mixed with the potassium compound, thereby controlling the resulting potassium titanate to have a desired shape.

The alkali metal compound can be in the form of particles. The alkali metal compound preferably has an average particle diameter of from 0.1 mm to 10 mm, and more preferably from 0.5 mm to 10 mm, and still more preferably from 0.5 mm to 1 mm, because of easy handling.

Regarding a mixing ratio of the titanium compound and the alkali metal compound, for example, when the alkali metal titanate to be synthesized is potassium titanate, the ratio is preferably such that a molar ratio of the number of moles of titanium atoms in the titanium compound to the number of moles of potassium atoms in the potassium compound is from 2.6 to 3.3, more preferably from 2.6 to 3.0.

To the mixture of the titanium compound and the alkali metal compound may optionally be added powdery metallic titanium and/or titanium hydride, for example, in an amount of 0.01 mol to 0.2 mol per mol of titanium atoms in the titanium compound. In this case, a titanium source of the titanium compound in the mixing ratio of the titanium compound and the alkali metal compound is adjusted including such metallic titanium or titanium hydride. Further, an alkaline earth metal compound such as a magnesium compound or a barium compound may be added during mixing. By adding the alkaline earth metal compound, the formation of fibrous particles can be suppressed. Further, the mixture may contain an inorganic oxide or other compound such as Fe₂O₃, Al₂O₃, SiO₂, CeO₂, WO₃, ZrO₂, Zr(CO₃)₂, and CaCO₃ in a trace amount that does not affect the formation of the alkali metal titanate.

The mixture preferably contains a titanium compound and a potassium compound in an amount of 85mass% to 100mass%, and more preferably 85mass% to 97mass% when converted into solid content.

In the raw material mixing step, either dry mixing or wet mixing may be employed. The dry mixing is preferable because the step can be simplified.

Here, the mixing means that can be used herein includes mechanical crushing means such as a vibration mill, a vibration rod mill, a vibration ball mill, a bead mill, a turbo mill, and a planetary ball mill. In particular, the vibration rod mill filled with stick-shaped rods as crushing media is preferable. When crushing and mixing the titanium compound and the alkali metal compound with the vibration mill such as the vibration rod mill, an alcohol such as methanol or ethanol may be added, for example, in an amount of about 0.1 to 3.0% by weight based on the weight of the mixture, in order to suppress aggregation or adhesion of the titanium compound in the mill. Further, in order to suppress the aggregation and adhesion of the titanium compound in the mixing container such as the vibration mill, for example, wood powder, pulp powder, natural fiber powder or the like may be added as an additive such as an antiaggregating agent or a lubricant.

When the wet mixing is employed, a general organic solvent or the like such as pure water, alcohols, acetone, MEK, and THF can be used as a solvent. In order to improve dispersibility of the mixed powder to achieve uniform mixing, it is preferable that a surfactant or a dispersant may also be used.

The burning step is then carried out by heating the mixture obtained in the above raw material mixing step to a predetermined temperature while introducing the mixture into, for example, a rotary kiln or the like and allowing the mixture to flow. By the burning step, the mixture is calcined to obtain alkali metal titanate particles. Although a furnace or reaction vessel other than the rotary kiln may be used, the rotary kiln is suitable in terms of productivity.

In the burning step, the maximum temperature during heating is preferably 800 °C or higher, or further higher than 900 °C, and 1300 °C or lower, in order to promote the reaction and synthesize the alkali metal titanate particles.

Further, a time required for maintaining the temperature in the above temperature range is preferably 10 minutes to 10 hours, and preferably 30 minutes to 10 hours, in terms of promoting the reaction.

After the burning step, the crushing step may be optionally carried out. In the crushing step, the calcined product obtained by heating the mixture as described above can be crushed to form alkali metal titanate particles. The crushing step can employ a vibration mill, a vibration ball mill, a vibration rod mill, a bead mill, a turbo mill, a planetary ball mill, and an impact type crusher such as a hammer mill, a pulverizer, and a pin mill. Especially, the vibration rod mill is preferable. When a vibration rod mill is used, an amplitude width can be set to 2 mm to 8 mm. After crushing, a classification process or a sieving process may be optionally carried out.

The alkali metal titanate particles obtained in the above steps preferably have a 50% particle diameter D50 of from 30 µm to 60 µm, and even more preferably from 30 µm to 50 µm. Further, the alkali metal titanate particles preferably have a 10% particle diameter D10 of from 1 µm to 40 µm, and more preferably from 5 µm to 30 µm. Furthermore, the alkali metal titanate particles preferably have a 90% particle diameter D90 of from 40 µm to 90 µm, and more preferably from 50 µm to 70 µm. The alkali metal titanate particles preferably have a maximum particle diameter Dmax in a range of from 50 µm to 110 µm, and particularly from 70 µm to 90 µm. The 50% particle diameter D50, 10% particle diameter D10, 90% particle diameter D90, and maximum particle diameter Dmax of the alkali metal titanate particles are measured by the same method as the particle diameter measuring method for the particles containing the titanate compound.

Subsequently, the binder coating step is carried out by mixing the alkali metal titanate particles obtained as described above with a binder, and coating at least a part of the periphery of the alkali metal titanate particles with binder layers. Preferable examples of the binder are at least one of phenol resins, epoxy resins, polyimide resins, polyamide resins, unsaturated polyester resins, benzoxazine resins, cyanate ester resins, melamine resins, urea resins, polyurethane resins, diallyl phthalate resins, silicone resins, and vinyl ester resins. In particular, as described above, the binder containing the predetermined phenol resin is even more preferable.

For the mixing of the alkali metal titanate particles with the binder, a mixer can be used. Examples of the mixer that can be used herein include various mixers such as an electric coffee mill, Lödige^{®} mixer, and Henschel mixer. For example, when using the electric coffee mill (Select Grind MJ-518 from Melitta Ltd.), the alkali metal titanate particles and the binder in the form of a liquid or the like are introduced into the mixer and mixed for one minute. As a result, the binder layers are formed around at least a part of the alkali metal titanate particles, and the alkali metal titanate particles are bonded to each other and aggregated in the binder layers to form the particles containing the titanate compound.

The particles containing the titanate compound obtained in the binder coating step and removed from the mixer may be optionally dried by maintaining a temperature of 80 °C to 200 °C for 30 minutes to 5 hours in the drying step.

Since the particles containing the titanate compound thus produced may have desired friction and wear characteristics, the particles would be suitable for use in a friction material for friction sliding members such as brake linings, disc pads and clutch fading that constitute braking devices in automobiles, railroad vehicles, aircrafts, industrial machineries and the like. Further, as described above, the particles containing the titanate compound have a larger particle diameter and have substantially no impact on the human bodies, so that the safety of the health of the operator can be improved when manufacturing the friction material or the like.

The particles containing the titanate compound are preferably used as a material of the friction materials for brakes. For example, when the particles containing titanate compound are used as the material of the friction materials for brakes, a raw material mixture for friction materials containing from 15 to 25mass% of the particles containing the titanate compound, from 9 to 11 mass% of the phenol resin, from 7 to 9mass% of graphite (artificial graphite), from 25 to 30mass% of barium sulfate (baryte), from 6 to 8mass% of zirconium silicate, from 2 to 4mass% of antimony trisulfide, from 0 to 9mass% of copper fiber and powder, from 4 to 6mass% of cashew dust, from 1 to 3mass% of rubber powder, from 3 to 5mass% of aramid fiber, from 4 to 6mass% of mica, and from 0 to 2mass% of chrome iron ore (chromite) is formed into a shape of the friction material for brakes and pressurized at a surface pressure of 10 to 400 kgf/cm² and at a thermal mold temperature of 70 to 250 °C to provide a friction material for brakes.

### EXAMPLES

Next, the particles containing the titanate compound according to present invention were experimentally conducted and its effects were confirmed as described below. However, the description herein is merely for the purpose of illustration and is not intended to be limited thereto.

### <Test Example 1>

### (Production method)

### (Raw Material Mixing Step)

In a vibration rod mill (a small vibration mill for test and research from CHUO KAKOHKI CO., LTD), 350.6 g of titanium oxide agglomerates having an average particle diameter of 0.8 mm, 108.3 g of potassium carbonate powder having an average particle diameter of 0.5 mm, 9.6 g of titanium powder, and 19.1 g of wood chips (wood pellets) were filled, to which 0.5mass% of methanol was further added and treated at an amplitude of 5 mm for 15 minutes to obtain a raw material mixture. The vibration rod mill had an internal volume of 1 liter and 464 g of rods each having a diameter of 19 mm, and a length of 218 mm, and used 11.6 kg of cylindrical rod media made of stainless steel (SS).

### (Burning Step)

20 kg of the raw material mixture obtained by repeating the above operation was fed to a rotary kiln having a control temperature of 1180 °C at a flow rate of 15 kg/hour. A synthetic reaction to potassium titanate occurred in the rotary kiln, and the resulting burned product was discharged from the kiln. The discharged burned product was rapidly cooled to room temperature and used as a raw material for the next crushing step.

### (Crushing Step)

The burned product thus obtained was crushed with a vibration rod mill (MB-1 from CHUO KAKOKI CO., LTD) and then crushed with an impact type crusher (ACM Pulverizer from by Hosokawa Micron Co., Ltd.) that included a classifier to obtain potassium titanate particles having an average particle diameter of 43 µm. As a result of X-ray powder diffraction measurement, it was found that the potassium titanate particles obtained here had a single phase of potassium hexatitanate.

### (Binder Coating Step)

The above potassium titanate particles were then coated with a binder to prepare particles containing the titanate compound in which binder layers were formed around the potassium titanate particles. Here, the coating was carried out using an electric coffee mill (Select Grind MJ-518 from Melitta Ltd). The amounts of the alkali metal titanate particles and the liquid binder as shown in Table 1 below were added to the electric coffee mill, and mixed for 1 minute.

**[Table 1]**

| Example | Type of Resin | Alkali Metal Titanate Particles (g) | PL-5614 Resin Solid Content of 60% by mass (g) | PL-5614 Resin Solid Content of 30% by mass (g) | PL-2211 Resin Solid Content of 30% by mass (g) | Drying |
|---|---|---|---|---|---|---|
| Example 1 | A | 60 | 3 | - | - | Yes |
| Example 2 | B | 60 | - | 3 | - | No |
| Example 3 | B | 60 | - | 6 | - | No |
| Example 4 | B | 60 | - | 6 | - | Yes |
| Example 5 | C | 60 | - | - | 3 | No |
| Example 6 | C | 60 | - | - | 3 | Yes |
| Example 7 | C | 60 | - | - | 6 | No |
| Example 8 | C | 60 | - | - | 6 | Yes |

### (Drying Step)

Subsequently, for Examples 1, 4, 6 and 8, the particles containing the titanate compound removed out from the electric coffee mill which was the mixer were dried at a temperature of 120 °C for 1 hour.

Here, as shown in Table 1, the particles containing the titanate compound according to Examples 1 to 8 were produced, which were different in the type and added amount of the binder and the presence or absence of drying.

The type A of binder as shown in Table 1 was obtained by concentrating a resol type phenol resin "PL-5614" from Gunei Chemical Industry Co., Ltd (a weight average molecular weight of 373, a resin solid content of 33mass%) under a reduced pressure to adjust its resin solid content to 60mass%. The type B of binder as shown in Table 1 was obtained by adding pure water to "PL-5614" to have a resin solid content of 30mass%. The type C of binder as shown in Table 1 was obtained by adding methanol to a resol type phenol resin "PL-2211" from Gunei Chemical Industry Co., Ltd (a weight average molecular weight of 2650, a resin solid content of 58mass%) to have a resin solid content of 30mass%.

The mass average molecular weight of each phenol resin was measured using a GPC measuring device (HLC 8320 GPC from TOSOH CORPORATION) and a column (TSKgel G 3000 HXL + G 2000 HKL + G 2000 HKL from TOSOH CORPORATION), with polystyrene as a standard substance.

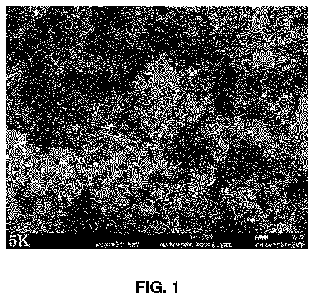

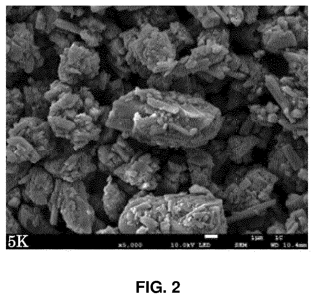

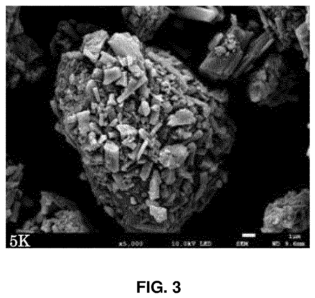

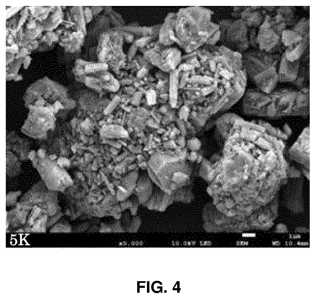

For reference, a SEM image of potassium titanate particles before coating are shown in FIG. 1, and SEM images of Examples 1, 7 and 8 are shown in FIGS. 2 to 4, respectively.

### (Evaluation)

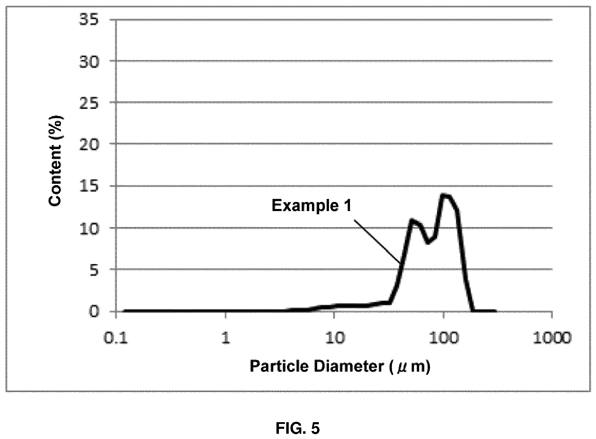

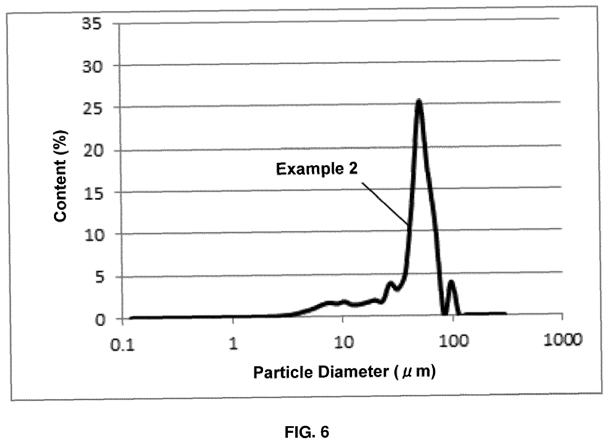

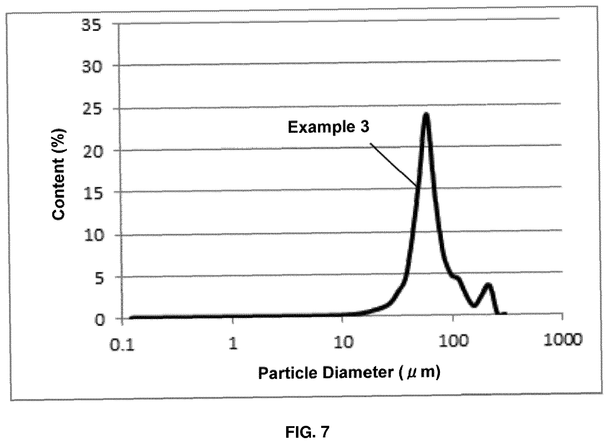

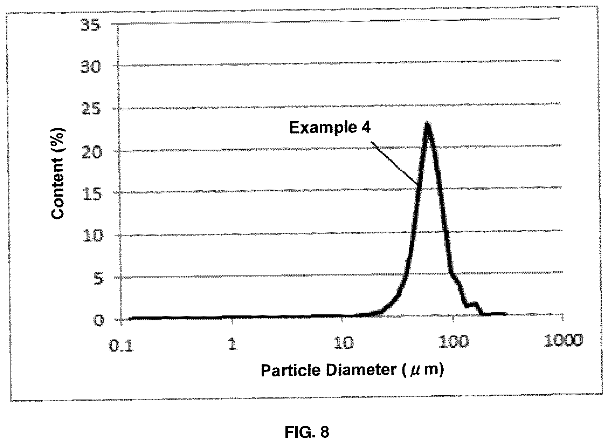

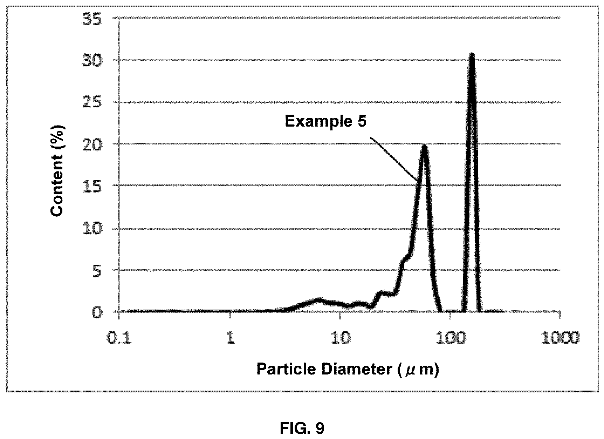

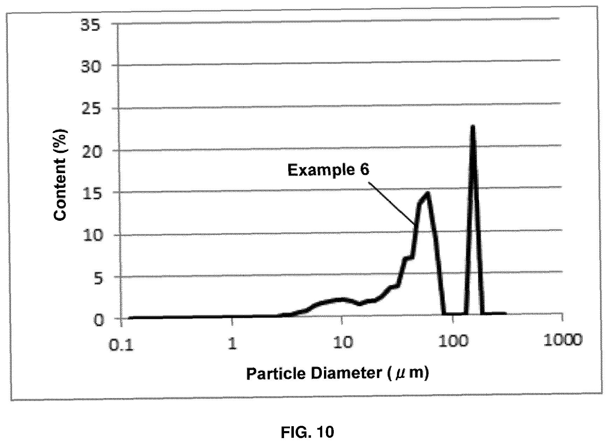

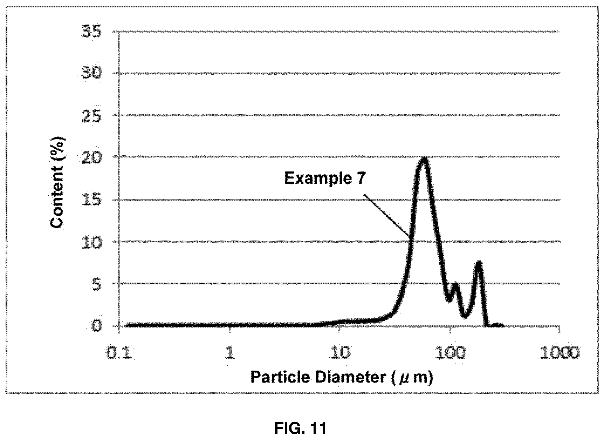

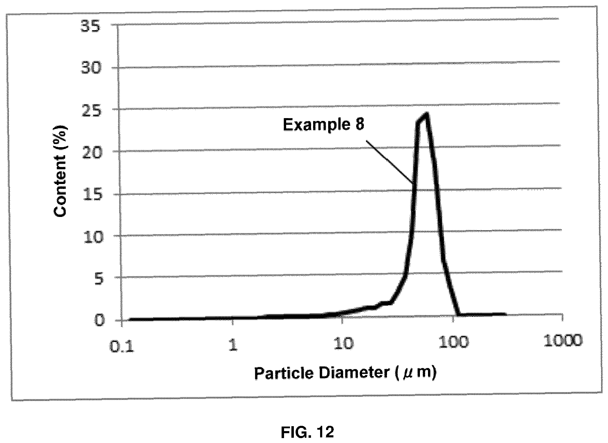

According to the method as described above, using PITA-3 model from Seishin Enterprise Co., Ltd as a particle size/shape distribution measuring device, the 50% particle diameter D50, 10% particle diameter D10, 90% particle diameter D90, maximum particle diameter Dmax, and SPAN value of each of the coated particles containing the titanate compound of Examples 1 to 8 were calculated. The volume frequency distributions of the particles containing the titanate compound of Examples 1 to 8 are shown in FIGS. 5 to 12, respectively.

Further, the particles containing the titanate compound having a thickness of 3 µm or less, a length of 5 µm or more, and an aspect ratio of 3 or more were defined as fibrous particles, and the number and percentage of the potassium titanate particles and the particles containing the titanate compound of Examples 1 to 8 were also calculated by the method as described above. Here, as the particle size/shape distribution measuring device, PITA-3 model from Seishin Enterprise Co., Ltd was used.

Table 2 shows these results.

| | Particle Diameter (µm) | | | | SPAN Value | Fibrous Particles | | Number of Measured Particles | Number of Fibrous Particles per 70,000 Particles* |
|---|---|---|---|---|---|---|---|---|---|
| | D10 | D50 | D90 | Max. | | Number of Particles | Percentage (% by mass) | | |
| Potassium Titanate Particles | 11 | 47 | 63 | 76 | 1.10 | 849 | 0.082 | 70,024 | 848 |
| Example 1 | 36 | 75 | 122 | 144 | 1.15 | 36 | 0.001 | 10,000 | 252 |
| Example 2 | 12 | 46 | 64 | 85 | 1.13 | 35 | 0.007 | 10,000 | 245 |
| Example 3 | 36 | 57 | 107 | 202 | 1.25 | 65 | <0.001 | 10,000 | 455 |
| Example 4 | 37 | 57 | 87 | 137 | 0.88 | 81 | <0.001 | 10,000 | 567 |
| Example 5 | 15 | 52 | 126 | 157 | 2.13 | 24 | 0.008 | 10,000 | 168 |
| Example 6 | 10 | 48 | 105 | 136 | 1.98 | 21 | 0.007 | 10,000 | 147 |
| Example 7 | 35 | 56 | 115 | 180 | 1.43 | 45 | 0.001 | 10,000 | 315 |
| Example 8 | 31 | 52 | 70 | 95 | 0.75 | 76 | 0.005 | 10,000 | 532 |

| | | | | | | | | | |
|---|---|---|---|---|---|---|---|---|---|
| *For Examples 1-8, the number of measured particles was converted to the number of fibgrous particles per 70,000. | | | | | | | | | |

It is found from the results as shown in Table 2 that the number and percentage of the fibrous particles in the particles containing the titanate compound of each of Examples 1 to 8 are significantly reduced as compared with the potassium titanate particles before coating.

Therefore, it was found that the present invention achieves a reduced impact on the human bodies in use and improved safety.

### <Test Example 2>

A friction material was prepared for each of the particles containing the titanate compound of Example 4 in Test Example 1 and the potassium titanate particles before coating, and a brake test was conducted.

More particularly, the particles containing the titanate compound of Example 4 or the potassium titanate particles before coating was mixed with the phenol resin, artificial graphite, barium sulfate, zirconium silicate, antimony trisulfide, copper fiber, copper powder, cashew dust, rubber powder, aramid fiber, mica and chromite at the ratios as shown in Table 3 to prepare a mixed powder. The mixed powder was pre-formed at 200 kgf/m², and the resulting pre-formed product was preheated at 70 °C for 2 hours and then thermoformed at 180 °C and 400 kgf/cm². A heat treatment was then carried out at a temperature of 250 °C and at 10 kgf/cm² for 3 hours to obtain a formed product. From the formed body, a friction material having a length of 10 mm, a width of 50 mm, and a thickness of 10 mm was produced.

**[Table 3]**

| Raw Material for Friction Material | Mixing Ratio (% by mass) |
|---|---|
| Particles Containing Titanate Compound (Example 4) or Potassium Titanate Particles before Coating | 19.5 |
| Phenol Resin | 9.5 |
| Artificial Graphite | 8.7 |
| Barium Sulfate | 25.3 |
| Zirconium Silicate | 7.8 |
| Antimony Trisulfide | 3.6 |
| Copper Fiber | 5.0 |
| Copper Powder | 3.0 |
| Cashew Dust | 5.4 |
| Rubber Powder | 2.6 |
| Aramid Fiber | 3.4 |
| Mica | 5.2 |
| Chromite | 1.0 |

A friction coefficient of each of the above friction materials was measured in accordance with JASO-C406, which is a standard of Society of Automotive Engineers of Japan. An average value of the friction coefficients in the second fade test of the second fade recovery test was 0.343 for the friction material using the potassium titanate particles before coating, whereas it was 0.350 for the friction material using the particles containing the titanate compound of Example 4. Therefore, it was found that the particles containing the titanate compound coated with the binder also had the same braking performance as the uncoated potassium titanate particles.

## Claims

1. Particles containing a titanate compound, comprising:
alkali metal titanate particles; and
binder layers,
wherein the particles containing the titanate compound has a 50% particle diameter D50 of from 40 µm to 100 µm, and
wherein a content ratio of the particles containing the titanate compound having a shorter diameter d of 3 µm or less, a longer diameter L of 5 µm or more, and an aspect ratio (L/d) of 3 or more is 0.05mass% or less.

2. The particles containing the titanate compound according to claim 1, wherein the particles have a SPAN value of from 0.1 to 5.0.

3. The particles containing the titanate compound according to claim 1 or 2, wherein an alkali metal contained in the alkali metal titanate particles is at least one selected from the group consisting of potassium, sodium and lithium.

4. The particles containing the titanate compound according to any one of claims 1 to 3,
wherein the binder layers comprise a phenol resin, and
wherein a content of the phenol resin is from 1mass% to 10mass% with respect to the total amount of the particles containing the titanate compound.

5. The particles containing the titanate compound according to claim 4, wherein the phenol resin is a resol type phenol resin.

6. A method for producing particles containing a titanate compound, comprising:
a raw material mixing step of mixing a titanium compound with an alkali metal compound to obtain a mixture;
a burning step of heating the mixture to obtain alkali metal titanate particles; and
a binder coating step of mixing the alkali metal titanate particles with a binder and coating at least a part of the periphery of the alkali metal titanate particles with binder layers to obtain the particles containing the titanate compound.

7. The method according to claim 6, comprising a drying step of drying the particles containing the titanate compound after the binder coating step.

8. The method according to claim 6 or 7, wherein the alkali metal titanate particles have a 50% particle diameter D50 of from 30 µm to 60 µm.

9. The method according to any one of claims 6 to 8, wherein the burning step comprises heating the mixture in a temperature range of from 800 °C to 1300 °C and maintaining the temperature for 10 minutes to 10 hours.

10. The method according to any one of claims 6 to 9, wherein an alkali metal contained in the alkali metal titanate particles is at least one selected from the group consisting of potassium, sodium and lithium.

11. The method according to any one of claims 6 to 10, wherein the binder used in the binder coating step comprises a resol type phenol resin.

12. A friction material, comprising the particles containing the titanate compound according to any one of claims 1 to 5.
